# EUROPEAN PATENT SPECIFICATION

(11) **EP 3 190 376 B1**
(45) Date of publication and mention of the grant of the patent: **11.04.2018**
(21) Application number: 16206268.1
(22) Date of filing: 22.12.2016
(51) Int. Cl.: F41A 35/00, F41B 7/00, F41B 11/646, F41A 11/00, B25B 27/30

(54) **SPRING COMPRESSOR FOR AN AIRGUN**
FEDERSPANNER FÜR EIN LUFTGEWEHR
COMPRESSEUR DE RESSORTS POUR ARME À AIR COMPRIMÉ

(30) Priority: 07.01.2016 US 201614990437; 09.09.2016 US 201615260365
(43) Date of publication of application: 12.07.2017
(73) Proprietor: Gore, Thomas, Pinckney, MI 48169 (US)
(72) Inventor: Gore, Thomas, Pinckney, MI 48169 (US)
(74) Representative: McDonough, Jonathan

(56) References cited:
- US-A- 2 409 191
- US-A- 4 654 944
- US-A- 6 098 973
- US-A1- 2011 173 868
- US-B1- 9 157 695

## Description

The disclosure generally relates to a spring compressor for compressing and/or decompressing a power spring within a compression tube of an air gun.

An air gun is a rifle, pistol, etc., which utilizes a compressed gas to fire a projectile. Air guns may be powered by, for example, a coil spring assembly or a gas spring assembly, hereinafter referred to generally as a power spring.

Air guns typically include a compression tube that defines a compression chamber. The power spring is positioned within the compression chamber. A trigger assembly is positioned within and adjacent a rearward end of the compression chamber, adjacent the power spring, and is securely attached to the compression tube. During assembly of the air gun, the power spring must be compressed to a certain degree to enable the trigger assembly to properly seat within the rearward end of the compression chamber, so that it may then be attached to the compression tube. During disassembly, when the trigger assembly is being disconnected from the compression tube, the trigger assembly and the power spring must be restrained to prevent rapid expansion of the power spring and ejection of the power spring and/or trigger assembly from the compression tube. A spring compressor may be used to bias the trigger assembly against the power spring to compress the power spring during assembly, and restrain the power spring and the trigger assembly during disassembly. However, while spring compressors such as the one known from US 4 654 944 A1 are common in the filed of mechanics, they are not convenient for the particular purpose. The present invention seeks to overcome the problems of the prior art.

Accordingly, in a first aspect, the present invention provides a spring compressor comprising:
a beam extending along a longitudinal axis between a first end and a second end;
a clamp system disposed adjacent the first end of the beam, and operable to directly engage a picatinny style accessory rail in clamping engagement; and
a compressor attached to the beam adjacent the second end of the beam and axially moveable along the longitudinal axis relative to the beam.

Preferably the clamp system comprises a pair of opposing clamp surfaces for engaging the accessory rail in interlocking engagement therebetween, wherein the interlocking engagement between the pair of opposing clamp surfaces and the accessory rail prevents lateral movement of the beam relative to the accessory rail in a direction transverse to the longitudinal axis, and wherein the interlocking engagement between the pair of opposing clamp surfaces and the accessory rail allows longitudinal movement of the beam relative to the accessory rail along the longitudinal axis.

Preferably the clamp system comprises a first wall and a second wall, with the first wall and the second wall spaced apart from each other and extending along the longitudinal axis.

Preferably the clamp system comprises a first flat head set screw in threaded engagement with the first wall, and a second flat head set screw in threaded engagement with the second wall, the first flat head set screw and the second flat head set screw being disposed opposite each other across the longitudinal axis, the first flat head set screw and the second flat head set screw being axially aligned with each other along the longitudinal axis;
the first flat head set screw comprising a first clamp surface, and the second flat head set screw comprising a second clamp surface, with the pair of opposing clamp surfaces comprising the first clamp surface and the second clamp surface; and
each of the first flat head set screw and the second flat head set screw comprising a head portion and a shank portion, with the head portion of the first flat head set screw defining the first clamp surface and the head portion of the second flat head set screw defining the second clamp surface.

Preferably the first wall defines a first slot extending along the longitudinal axis, and the second wall defines a second slot extending along the longitudinal axis, with the first slot and the second slot disposed opposite each other across the longitudinal axis, and with the first slot and the second slot comprising the pair of opposing clamp surfaces; and
the first slot and the second slot forming a dovetail mortise configuration for interlocking engagement with a dovetail shaped tenon.

Preferably the clamp system comprises a cross bore extending transverse to the longitudinal axis, the cross bore comprising a first section extending through the first wall and a second section extending through the second wall;
the second section of the cross bore comprising a thread form having a major diameter and a minor diameter; and
the first section of the cross bore comprising a diameter that is larger than the major diameter of the thread form of the second section of the cross bore.

Preferably the spring compressor further comprises a clamp screw extending through the first section of the cross bore and into threaded engagement with the second section of the cross bore, and operable to draw the first wall and the second wall towards each other to clamp the accessory rail between the pair of opposing clamp surfaces.

Preferably the clamp system comprises a spreader screw extending through the first wall and in threaded engagement with the first wall, and having a distal end in abutting engagement with the second wall, such that movement of the spreader screw toward the second wall spreads the first wall and the second wall apart from each other.

Preferably the compressor comprises a post extending from the beam in a direction substantially perpendicular to the longitudinal axis of the beam.

Preferably the post defines a bore extending along a central axis of the post, with the bore having an open face and an end.

Preferably the compressor comprises a button slideably moveable within the bore relative to the post along the central axis of the post and a biasing device biasing against the button.

Preferably the post comprises a through bore extending generally parallel with the longitudinal axis of the beam and generally perpendicular to the central axis of the post and the button comprises a keyhole bore extending generally parallel with the longitudinal axis of the beam and generally perpendicular to the central axis of the post.

Preferably the keyhole bore comprises a smooth bore portion, and a threaded portion defining a thread form having a major diameter and a minor diameter;
the smooth bore portion of the keyhole bore comprising a diameter that is larger than the major diameter of the threaded portion of the keyhole bore.

Preferably the button is moveable between a depressed position and a raised position, with the threaded rod disengaged from threaded engagement with the threaded portion of the keyhole bore when the button is disposed in the depressed position so that the threaded rod is slideable through the smooth bore portion of the keyhole bore, and with the threaded rod engaged in threaded engagement with the threaded portion of the keyhole bore when the button is disposed in the raised position, such that rotation of the threaded rod in a first rotational direction advances the contact end of the threaded rod toward the first end of the beam, and rotation of the threaded rod in a second rotational direction retracts the contact end of the threaded rod away from the first end of the beam and wherein the biasing device biases the button into the raised position.

In a further aspect of the invention there is provided a thread engagement device comprising:
a body defining a bore extending along a central axis, with the bore having an open face and an end;
wherein the body includes a through bore extending generally perpendicular to the central axis of the post;
a piston slideably moveable within the bore along the central axis, between a depressed position and a raised position;
wherein the piston includes a keyhole bore extending generally perpendicular to the central axis;
a threaded rod extending through the through bore in the body and the keyhole bore in the button;
wherein the keyhole bore includes a smooth bore portion, and a threaded portion; and
a biasing device disposed within the bore, and biasing the piston into the raised position, with the threaded rod disengaged from threaded engagement with the threaded portion of the keyhole bore when the piston is disposed in the depressed position so that the threaded rod is slideable through the smooth bore portion of the keyhole bore, and with the threaded rod engaged in threaded engagement with the threaded portion of the keyhole bore when the piston is disposed in the raised position.

Preferably the threaded portion of the keyhole bore includes a thread form having a major diameter and a minor diameter.

Preferably the smooth bore portion of the keyhole bore includes a diameter that is larger than the major diameter of the threaded portion of the keyhole bore.

Preferably the biasing device includes one of: a spring, an electric motor, a piezoelectric actuator, an electronic actuator, a pneumatic actuator, a hydraulic actuator, or a sealed gas chamber.

In a further aspect of the invention there is provided a clamp system for attachment to a picatinny style accessory rail, the clamp system comprising:
a beam having a first wall and a second wall, with the first wall and the second wall spaced apart from each other and extending along a longitudinal axis;
a first flat head set screw in threaded engagement with the first wall, and a second flat head set screw in threaded engagement with the second wall, with the first flat head set screw and the second flat head set screw disposed opposite each other across the longitudinal axis, and with the first flat head set screw and the second flat head set screw axially aligned with each other along the longitudinal axis; and
wherein the first flat head set screw includes a first clamp surface, and the second flat head set screw includes a second clamp surface, with the first clamp surface and the second clamp surface forming a pair of opposing clamp surfaces for engaging the picatinny style accessory rail in interlocking engagement therebetween, wherein the interlocking engagement between the pair of opposing clamp surfaces and the accessory rail prevents lateral movement of the beam relative to the accessory rail in a direction transverse to the longitudinal axis, and wherein the interlocking engagement between the pair of opposing clamp surfaces and the accessory rail allows longitudinal movement of the beam relative to the accessory rail along the longitudinal axis.

Preferably each of the first flat head set screw and the second flat head set screw include a head portion and a shank portion, with the head portion of the first flat head set screw defining the first clamp surface and the head portion of the second flat head set screw defining the second clamp surface.

Preferably the beam includes a channel extending from the first end of the beam axially along the longitudinal axis to an interior end, and separating the beam along the longitudinal axis to define the first wall and the second wall.

Preferably the clamp system further includes a cross bore extending transverse to the longitudinal axis, wherein the cross bore includes a first section extending through the first wall, and a second section extending through the second wall.

Preferably the second section of the cross bore includes a thread form having a major diameter and a minor diameter.

Preferably the first section of the cross bore includes a diameter that is larger than the major diameter of the thread form of the second section of the cross bore.

Preferably the clamp system further comprises a clamp screw extending through the first section of the cross bore and into threaded engagement with the second section of the cross bore, and operable to draw the first wall and the second wall towards each other to clamp the accessory rail between the pair of opposing clamp surfaces.

Preferably the clamp system further comprises a spreader screw extending through the first wall and in threaded engagement with the first wall, and having a distal end in abutting engagement with the second wall, such that movement of the spreader screw toward the second wall spreads the first wall and the second wall apart from each other.

Preferably the clamp system further comprises a third flat head set screw in threaded engagement with the first wall, and a fourth flat head set screw in threaded engagement with the second wall, with the third flat head set screw and the fourth flat head set screw disposed opposite each other across the longitudinal axis, and with the third flat head set screw and the fourth flat head set screw axially aligned with each other along the longitudinal axis and axially spaced from the first flat head set screw and the second flat head set screw along the longitudinal axis, wherein the first flat head set screw and the third flat head set screw cooperate to define the first clamp surface, and the second flat head set screw and the fourth flat head set screw cooperate to define the second clamp surface.The clamp system may include a pair of opposing clamp surfaces operable to engage a dovetail tenon shape of the picatinny style accessory rail on an air gun, thereby allowing the spring compressor to be axially positioned relative to a rearward end of a compression tube of the air gun. Once properly positioned, a lock screw may be tightened to directly tighten the clamp system against the accessory rail, thereby securing the spring compressor relative to the air gun. Since the accessory rail on an air gun is substantially aligned with a bore axis of the barrel, the interlocking engagement between the slot and the accessory rail automatically aligns the spring compressor along the bore axis of the air gun. The compressor may then be moved axially into and out of engagement with a trigger assembly to compress and/or decompress a power spring for assembly and disassembly of the air gun. The spring compressor is a simple, lightweight device that is easily handled and transported. The spring compressor may be used with any air gun that includes a standard picatinny or weaver style accessory rail, regardless of the length of the air gun.

The present invention will now be described by way of example only and not in any limitative sense with reference to the accompanying drawings in which
Figure 1 is a schematic exploded side view of an air gun, showing a compression tube, a power spring, and a trigger assembly.
Figure 2 is a schematic side view of the air gun showing a spring compressor attached to the compression tube and biasing the trigger assembly against the power spring for assembly and/or disassembly.
Figure 3 is a schematic perspective view of the spring compressor.
Figure 4 is a schematic plan view of the spring compressor.
Figure 5 is a schematic side view of the spring compressor.
Figure 6 is a schematic end view of the spring compressor.
Figure 7 is a schematic cross sectional view of the spring compressor attached to an accessory rail on the compression tube.
Figure 8 is a schematic partial cross sectional view of an alternative embodiment of the spring compressor.
Figure 9 is a schematic plan view of the alternative embodiment of the spring compressor shown in Figure 8.
Figure 10 is a schematic perspective view of a third embodiment of the spring compressor.
Figure 11 is a schematic side view of the third embodiment of the spring compressor.
Figure 12 is a fragmentary schematic plan view of the third embodiment of the spring compressor showing a clamp system.
Figure 13 is a schematic end view of the third embodiment of the spring compressor showing the clamp system.
Figure 14 is a fragmentary schematic exploded cross sectional view of the third embodiment of the spring compressor.
Figure 15 is a schematic exploded end view of the third embodiment of the spring compressor.
Figure 16 is a schematic cross sectional view of the third embodiment of the spring compressor.
Figure 17 is a schematic perspective view of a button for the third embodiment of the spring compressor.
Figure 18 is a schematic perspective view of a fourth embodiment of the spring compressor.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims.

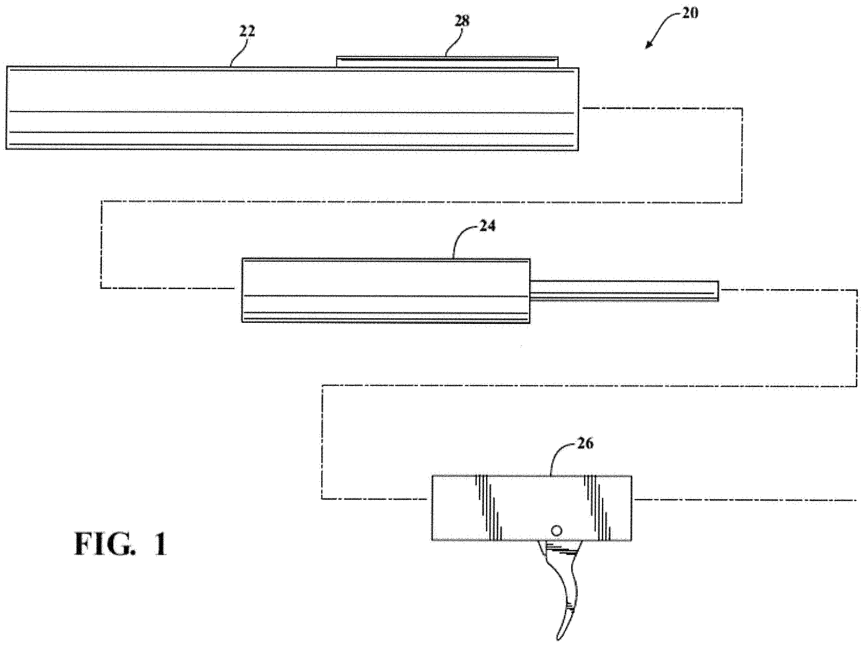

Referring to the Figures, wherein like numerals indicate like parts throughout the several views, components of an air gun 20 are generally shown in Figure 1. Referring to Figure 1, the air gun 20 includes a compression tube 22. The compression tube 22 is a generally hollow cylinder, which supports a power spring 24 and a trigger assembly 26. A barrel (not shown) is attached to the compression tube 22, and the compression tube 22 and barrel are supported by a stock (not shown). As shown, and as is typical of most air guns 20, the compression tube 22 includes an accessory rail 28 that is typically used for mounting a telescopic sight. The accessory rail 28 may be integrally formed with the compression tube 22, or may be a separate component fixedly attached to the compression tube 22, with multiple fasteners. The accessory rail 28 includes a standardized dovetailed tenon shape and/or configuration that is common throughout the firearms industry. The accessory rail 28 may be referred to as a picatinny rail or a weaver rail. The geometry of the picatinny rail is defined by US military standard MIL-STD-1913. The weaver rail includes the same profile or cross section perpendicular to a longitudinal axis of the picatinny rail, with the primary difference between the geometry of the weaver rail and the picatinny rail being in the spacing and sizing of laterally extending recoil grooves (not shown). However, the placement of the recoil grooves is not pertinent to the teachings of this disclosure. As such, for the purpose of this disclosure, the weaver rail and the picatinny rail may be considered to include the same general cross sectional geometry as that described in MIL-STD-1973, and known to those skilled in the art. Furthermore, it should be appreciated that the accessory rail 28 may include a shape that is not exactly like the weaver rail and/or the picatinny rail, but may otherwise be generally described as a generally dovetailed shape similar to those of the weaver rail and the picatinny rail.

The power spring 24 may include, but is not limited to, a coil spring assembly or a gas spring assembly. The power spring 24 assembly is compressed to store energy. Upon being released by actuation of the trigger assembly 26, the power spring 24 moves a piston to compress a gas within a compression chamber, thereby propelling a projectile through the barrel as is known in the art. The trigger assembly 26 is fixedly attached and/or secured to the compression tube 22, within an interior region of the compression tube 22. The trigger assembly 26 may be attached to the compression tube 22 in any suitable manner, such as with a fastener, e.g., a pin or screw, that passes through a wall of the compression tube 22 and the trigger assembly 26. The power spring 24 is disposed within the interior of the compression tube 22, and is secured in place by the trigger assembly 26, which abuts the power spring 24. In order to properly position the trigger assembly 26 within the compression tube 22 and attach the trigger assembly 26 to the compression tube 22, the power spring 24 must be partially compressed. Additionally, in order to remove the trigger assembly 26 and/or the power spring 24, the trigger assembly 26 must be restrained while the fasteners securing the trigger assembly 26 to the compression tube 22 are removed, in order to prevent rapid expansion of the power spring 24, which may rapidly eject the trigger assembly 26 and/or the power spring 24 from within the interior of the compression tube 22.

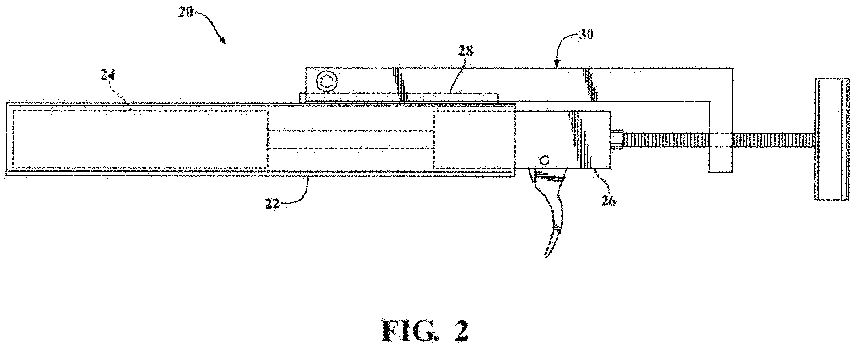

Referring to Figure 2, in order to compress and/or restrain the power spring 24 during assembly and/or disassembly, a spring compressor 30 may be attached to the compression tube 22 and used to compress the power spring 24, or release compression of the power spring 24 in a controlled manner. The spring compressor 30 is attached to the compression tube 22, and biases the trigger assembly 26 and the power spring 24 against the compression tube 22 to compress and/or controllably release compression of the power spring 24.

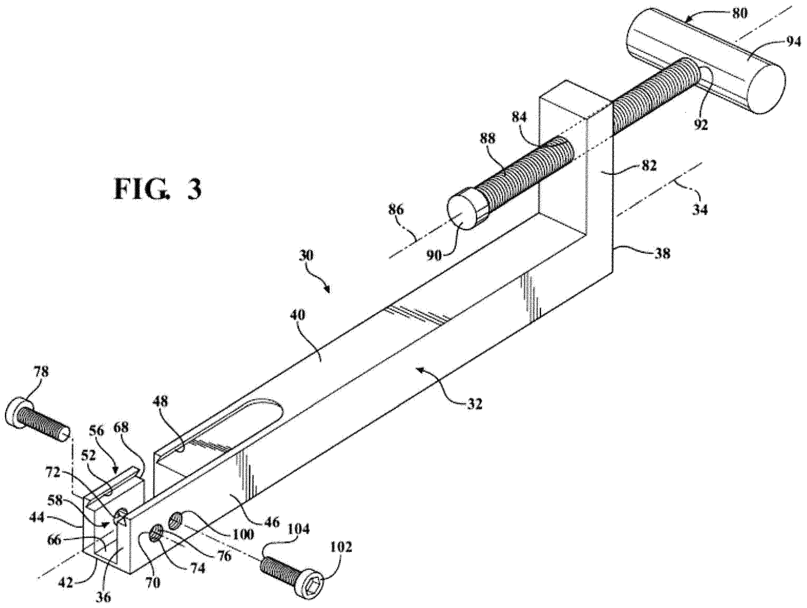

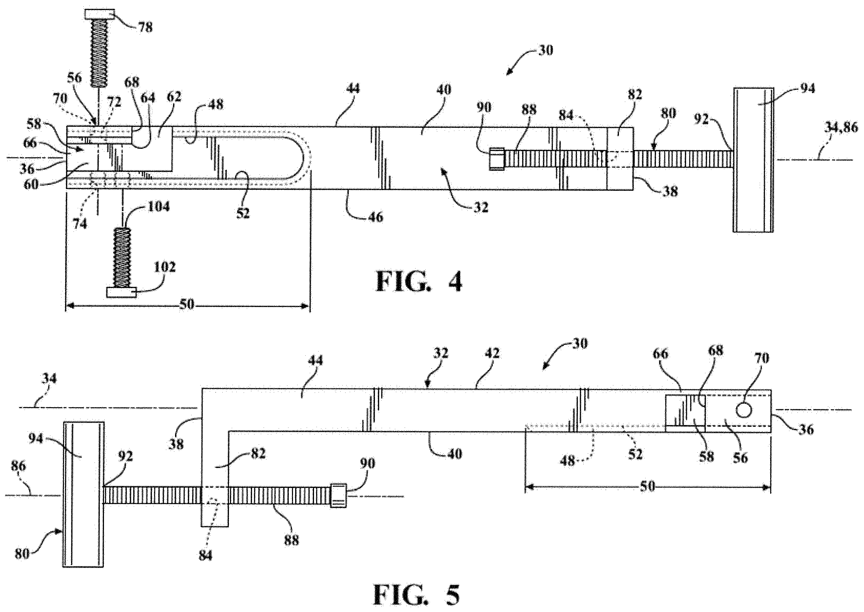

Referring to Figures 3-7, an exemplary embodiment of the spring compressor 30 is generally shown. Referring to Figures 4 and 5, the spring compressor 30 includes a beam 32 that extends along a longitudinal axis 34, between a first end 36 and a second end 38. Preferably, the beam 32 includes a cross section, taken perpendicular to the longitudinal axis 34 of the beam 32, which defines a non-circular cross sectional shape. However, in some embodiments, the cross sectional shape of the beam 32 perpendicular to the longitudinal axis 34 of the beam 32 may include a circular cross sectional shape. As shown in the exemplary embodiment, the cross sectional shape of the beam 32 perpendicular to the longitudinal axis 34 of the beam 32 is a rectangular shape. However, it should be appreciated that the cross sectional shape of the beam 32 may differ from the exemplary embodiment shown in the Figures and described herein.

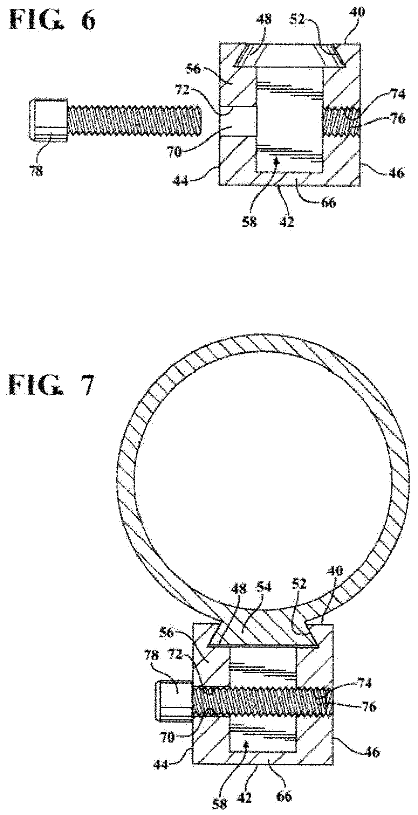

As shown in the Figures, the beam 32 includes an upper longitudinal surface 40, a lower longitudinal surface 42, a first longitudinal side surface 44, and a second longitudinal side surface 46, which all cooperate to define the generally rectangular cross sectional shape of the beam 32. Referring to Figure 4, the beam 32 defines a slot 48 that extends along the longitudinal axis 34. Referring also to Figure 6, the slot 48 is disposed adjacent the upper longitudinal surface 40 of the beam 32, and extends a slot distance 50 (shown in Figure 4) from the first end 36 of the beam 32 toward the second end 38 of the beam 32, the slot distance 50 may include any desirable distance, but is preferably longer than a length of the standardized accessory rail 28 on the compression tube 22.

Referring to Figures 6 and 7, the slot 48 defines a shape corresponding to the accessory rail 28 on the compression tube 22 of the air gun 20. The slot 48 is sized and shaped to enable the slot 48 to slide over the accessory rail 28, in a direction parallel with the longitudinal axis 34 of the beam 32 to engage the accessory rail 28 in interlocking engagement therebetween. The interlocking engagement between the slot 48 and the accessory rail 28 prevents lateral movement of the beam 32 relative to the air gun 20 in a direction transverse to the longitudinal axis 34 of the beam 32, while allowing longitudinal movement of the beam 32 relative to the compression tube 22 of the air gun 20 along the longitudinal axis 34 of the beam 32.

As best shown in Figures 6 and 7, the slot 48 includes a dovetail configuration extending along the longitudinal axis 34 of the beam 32. More specifically, the slot 48 defines a cross section perpendicular to the longitudinal axis 34 of the beam 32 that defines a dovetail mortise 52. The cross sectional shape of the slot 48, i.e., the dovetail mortise 52, is extended along the longitudinal axis 34 to define the dovetail shaped slot 48. As best shown in Figure 7, the accessory rail 28 defines a cross sectional perpendicular to the longitudinal axis 34 of the beam 32 that defines a dovetail tenon 54. The cross sectional shape of the accessory rail 28, i.e., the dovetail tenon 54, is extended along the longitudinal axis 34 to define the dovetail shaped accessory rail 28.

Referring to Figures 4 and 5, the beam 32 includes a clamp portion 56 that is disposed adjacent the first end 36 of the beam 32. The clamp portion 56 is operable to directly engage the accessory rail 28 on the compression tube 22 of the air gun 20 in clamping engagement, such as shown in Figure 7. The clamp portion 56 is formed from the first longitudinal side surface 44, and may at least partially define the slot 48. The clamp portion 56 and the beam 32 are integrally formed together from a single piece of material, such as bar stock. Preferably, the beam 32, including the clamp portion 56, are formed from a metal material, such as steel or aluminum. However, it should be appreciated that the beam 32 may be formed from and include some other material that is rigid enough to provide the required stiffness needed while compressing the power spring 24.

Referring to Figure 4, the beam 32 includes a channel 58 having a first portion 60 and a second portion 62. The first portion 60 of the channel 58 extends from the first end 36 of the beam 32, axially along the longitudinal axis 34 to an interior bend 64. The second portion 62 of the channel 58 extends from the interior bend 64, in a direction that is transverse relative to the longitudinal axis 34 of the beam 32, to the first longitudinal side surface 44 of the beam 32. The clamp portion 56 is bounded by the first portion 60 and the second portion 62 of the channel 58.

Referring to Figure 6, the channel 58 defines and/or includes a bottom wall portion 66 of the beam 32, which is adjacent the lower longitudinal surface 42 of the beam 32. As noted above, the slot 48 is disposed adjacent the upper longitudinal surface 40 of the beam 32, which is opposite the bottom wall portion 66 of the beam 32. Accordingly, the bottom wall portion 66 is disposed on an opposite surface of the beam 32 relative to the slot 48 in the beam 32. The bottom wall portion 66 of the beam 32 extends between the clamp portion 56 and the second longitudinal side surface 46 of the beam 32. Accordingly, the first portion 60 of the channel 58 separates the clamp portion 56 from the second longitudinal side surface 46 of the beam 32.

As shown in Figure 6, the clamp portion 56 extends from the bottom wall portion 66 to a distal edge 68 adjacent the upper longitudinal surface 40 of the beam 32. Accordingly, it is the bottom wall portion 66 of the beam 32 that connects the clamp portion 56 to the remainder of the beam 32. Because the clamp portion 56 is bounded by the first portion 60 and the second portion 62 of the channel 58 (best shown in Figure 4), the clamp portion 56 may bend slightly about a joint at the intersection between the clamp portion 56 and the bottom wall portion 66 (shown in Figures 6 and 7), thereby allowing the clamp portion 56 to bend inward toward the second longitudinal side surface 46, opposite the clamp portion 56, such as shown in Figure 7. Accordingly, it is the channel 58 formed into the beam 32 that enables the operation of the clamp portion 56.

Referring to Figures 6 and 7, the beam 32 includes a cross bore 70 that extends transverse to the longitudinal axis 34 of the beam 32. The cross bore 70 includes a first section 72 and a second section 74. The first section 72 of the cross bore 70 extends through the clamp portion 56. The second section 74 of the cross bore 70 extends through the second longitudinal side surface 46 of the beam 32, and includes and/or defines a thread form 76. A clamp screw 78 extends through the first section 72 of the cross bore 70, and into threaded engagement with the thread form 76 in the second section 74 of the cross bore 70. The clamp screw 78 is operable to draw the clamp portion 56 towards the second longitudinal side surface 46 of the beam 32 when tightened, to clamp the accessory rail 28 of the air gun 20 between the clamp portion 56 and the second longitudinal side surface 46 of the beam 32.

Referring to Figures 3 and 4, the beam 32 includes a second bore 100 that extends through the second longitudinal side surface 46 of the beam 32, transverse to the longitudinal axis 34, and includes and/or defines a thread form. A spreading screw 102 may be positioned within and in threaded engagement with the second bore 100. The spreading screw 102 may be advanced within the second bore 100 until an axial end 104 of the spreading screw contacts the clamp portion 56. Further advancement of the spreading screw 102 within the second bore 100 causes the spreading screw 102 to press against the clamp portion 56, and bias the clamp portion 56 away from the second longitudinal side surface 46, thereby spreading or increasing a width of the slot 48. In so doing, the slot 48, between the clam portion and the second longitudinal side surface 46, may be sized to accept a slightly larger accessory rail 28.

Referring to Figure 2, a compressor 80 is attached to the beam 32 adjacent the second end 38 of the beam 32. The compressor 80 is axially moveable along the longitudinal axis 34 relative to the beam 32. The compressor 80 is used to contact and engage the trigger assembly 26, which in turn contacts and engages the power spring 24. With the spring compressor 30 clamped onto the accessory rail 28 of the compression tube 22 to secure the spring compressor 30 relative to the compression tube 22, moving the compressor 80 axially along the longitudinal axis 34 toward the first end 36 of the beam 32 compresses the power spring 24 and pushes the trigger assembly 26 further into the interior of the compression tube 22, to properly position the trigger assembly 26 within the interior of the compression tube 22 for attachment to the compression tube 22. With the spring compressor 30 clamped onto the accessory rail 28 of the compression tube 22 to secure the spring compressor 30 relative to the compression tube 22, moving the compressor 80 axially along the longitudinal axis 34 away from the first end 36 of the beam 32 slowly decompresses the power spring 24, allowing safe removal of the trigger assembly 26 and the power spring 24.

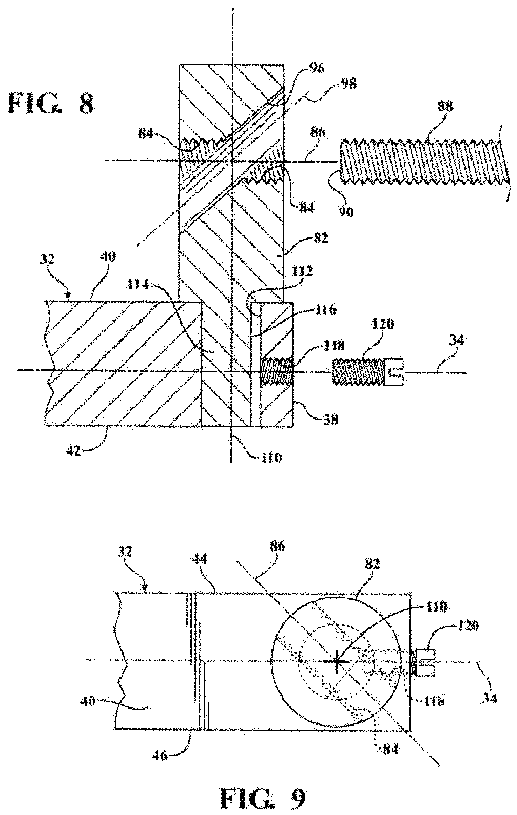

The compressor 80 may be configured in any manner capable of biasing against the trigger assembly 26 and moving axially along or parallel to the longitudinal axis 34 of the beam 32. As shown in the exemplary embodiment of the spring compressor 30 in Figures 3-7, the compressor 80 includes a post 82 attached to the beam 32 adjacent the second end 38 of the beam 32. Referring to Figure 5, the post 82 extends outward from the upper longitudinal surface 40 of the beam 32, in a direction substantially perpendicular to the longitudinal axis 34 of the beam 32. The exemplary embodiment of the spring compressor 30 shown in Figures 3-7 include the post 82 being integrally formed with the beam 32 from the same, single piece of material. However, other embodiments of the compressor 80, such as shown in Figure 8, may include the post 82 being separate from the beam 32.

Referring to Figures 4 and 5, the post 82 defines a threaded bore 84, which extends along a bore axis 86 in a direction substantially parallel to the longitudinal axis 34 of the beam 32. The bore axis 86 is generally parallel with and laterally offset from the longitudinal axis 34 of the beam 32. The compressor 80 includes a threaded rod 88 that is disposed in threaded engagement with the threaded bore 84 of the post 82. The threaded rod 88 includes a contact end 90 disposed between the post 82 and the first end 36 of the beam 32. Rotation of the threaded rod 88 in a first rotational direction, e.g., clockwise, advances the contact end 90 of the threaded rod 88 toward the first end 36 of the beam 32. Rotation of the threaded rod 88 in a second rotational direction, e.g., counterclockwise, retracts the contact end 90 of the threaded rod 88 away from the first end 36 of the beam 32. A second end 92 of the threaded rod 88 may include a handle 94, or some other device that enables easy application of torque to the threaded rod 88. For example, the second end 92 of the threaded rod 88 may be fitted with an attachment to receive a ratchet or a wrench. It should be appreciated that the compressor 80 described herein and shown in the Figures is merely an exemplary embodiment, and that the scope of the claims contemplates that other embodiments of the compressor 80 may be used to compress the power spring 24. Additionally, while the exemplary embodiment of the compressor 80 utilizes the mechanical advantage of the thread forms 76 between the threaded rod 88 and the threaded bore 84, alternative embodiments of the compressor 80 may include and use other types of mechanisms, such as but not limited to levers, electric linear actuators, pneumatic and/or hydraulic linear actuators, etc.

Referring to Figure 8, the post 82 may include and/or define an angled bore 96 that extends along an intersection axis 98. The intersection axis 98 is angled relative to and intersects the bore axis 86 of the threaded bore 84. The angled bore 96 intersects the threaded bore 84. Accordingly, the overlapping sections between the angled bore 96 and the threaded bore 84 are voids that do not include any threads for engaging the threaded rod 88. This enables the threaded rod 88 to slide relative to the post 82, without rotation about the bore axis 86 relative to the post 82, when the threaded rod 88 is substantially aligned with the angled bore 96 along the intersection axis 98. This is because when the threaded rod 88 is aligned along the intersection axis 98, the threads on the threaded rod 88 are disengaged from the threads on the threaded bore 84, thereby allowing the threaded rod 88 to slide relative to the post 82 without rotation. The threaded rod 88 is disposed in threaded engagement with the threaded bore 84 when substantially aligned with the threaded bore 84 along the bore axis 86. Accordingly, tilting the threaded rod 88 to align it with the intersection axis 98 allows for quick adjustment of the threaded rod 88, whereafter the threaded rod 88 may be then aligned along the bore axis 86 to engage the threaded bore 84 in threaded engagement.

Referring to Figure 8, an alternative embodiment of the spring compressor 30 is generally shown. As noted above, the post 82 of the compressor 80 is separate from the beam 32. The post 82 is rotatably supported by the beam 32 for rotation about a central post axis 110. The beam 32 defines an aperture 112, with a lower portion 114 of the post 82 received within the aperture 112. The lower portion 114 of the post 82 includes a planar section 116, which is parallel with and extends along the central post axis 110. The beam 32 includes a threaded angle adjustment bore 118 that extends from the second end 38 of the beam 32, axially along the longitudinal axis 34 of the beam 32, and into the aperture 112. A lock screw 120 is disposed in threaded engagement with the threaded angle adjustment bore 118. The lock screw 120 engages the lower portion 114 of the post 82 in abutting engagement. More specifically, the lock screw 120 contacts the planar section 116 on the post 82 to secure an angular position of the post 82 about the central post axis 110, relative to the beam 32. Referring to Figure 9, rotation of the post 82 about the central post axis 110, relative to the beam 32, rotates the bore axis 86 relative to the longitudinal axis 34 of the beam 32. By angling the bore axis 86 relative to the longitudinal axis 34 of the beam 32, the contact end 90 of the compressor 80 may be positioned to engage a portion of the trigger assembly 26 that is slightly off-center, or positioned near an edge of the compression tube 22.

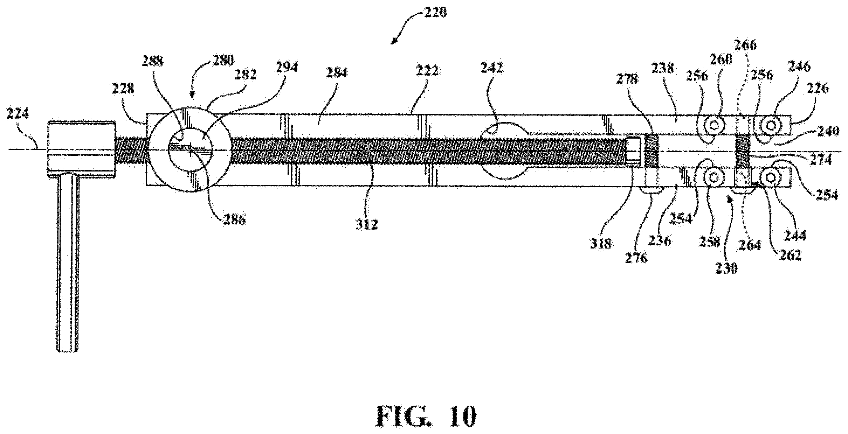

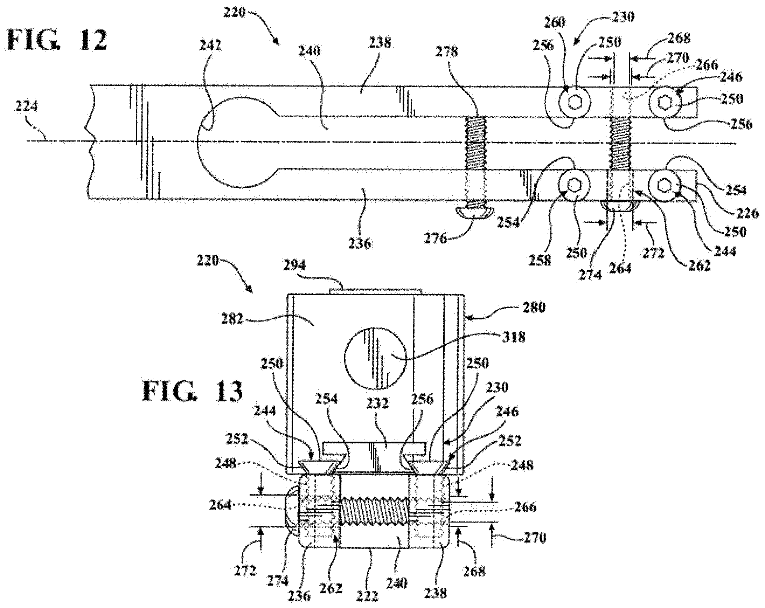

Referring to Figures 10-17, a third embodiment of the spring compressor is generally shown at 220. The spring compressor 220 includes a beam 222, which extends along a longitudinal axis 224, between a first end 226 and a second end 228. A clamp system 230 is disposed adjacent the first end 226 of the beam 222. As shown in Figure 13, the clamp system 230 is operable to directly engage a picatinny or weaver style accessory rail 232 (shown in Figure 13) in clamping engagement. As is known to those skilled in the art, the picatinny or weaver style accessory rails 232 have a standardized geometry that provides an accessory attachment system for many different devices, such as but not limited to firearms and/or air guns. For example, the picatinny or weaver style accessory rails 232 may be used to attach a scope, light, laser, or some other device to a rifle.

As best shown in Figure 13, the clamp system 230 includes a pair of opposing clamp surfaces 254, 256 that engage the picatinny or weaver style accessory rail 232 in interlocking engagement therebetween. The interlocking engagement between the pair of opposing clamp surfaces 254, 256 and the accessory rail 232 prevents lateral movement of the beam 222 relative to the accessory rail 232 in a direction transverse to the longitudinal axis 224 of the beam 222. Additionally, the interlocking engagement between the pair of opposing clamp surfaces 254, 256 and the accessory rail 232 allows longitudinal movement of the beam 222 relative to the accessory rail 232 along the longitudinal axis 224.

Referring to Figures 12 and 13, the clamp system 230 includes a first wall 236 and a second wall 238. The first wall 236 and the second wall 238 both extend along the longitudinal axis 224. The first wall 236 and the second wall 238 are spaced apart from each other, in a direction transverse to the longitudinal axis 224. As such, the first wall 236 and the second wall 238 are disposed opposite each other across the longitudinal axis 224 from each other. As best shown in Figures 10 and 12, the first wall 236 and/or the second wall 238 may be integrally formed with the beam 222. As best shown in Figure 12, the beam 222 of the spring compressor 220 includes a channel 240, which extends from the first end 226 of the beam 222 axially along the longitudinal axis 224, to an interior end 242. The channel 240 separates the beam 222 along the longitudinal axis 224 to define the first wall 236 and the second wall 238.

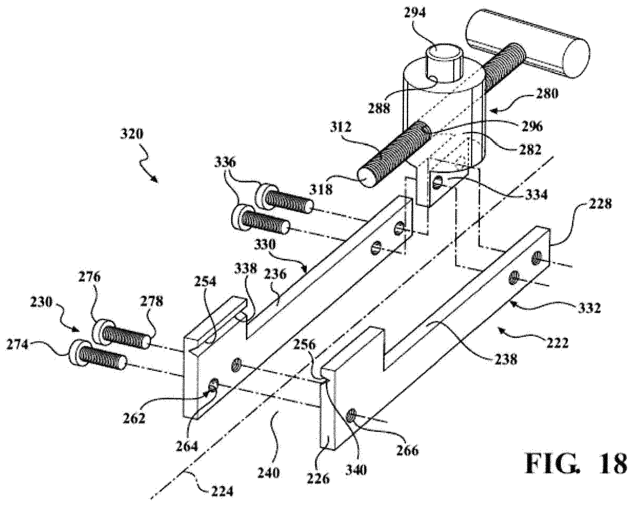

Alternatively, in other embodiments, the first wall 236 and/or the second wall 238 may be separate pieces from the beam 222 that are attached to the beam 222. However, at least one of the first wall 236 and the second wall 238 is attached to or integrally formed with the beam 222. In other embodiments, such as shown in Figure 18, the beam 222 may be comprised of two plates, i.e., a first plate 330 and a second plate 332 that are attached together adjacent the second end 228 of the beam 222 to form the beam 222. In such a case, the first plate forms the first wall 236, and the second plate forms the second wall 238.

As shown in the exemplary embodiment of the spring compressor 220 in Figures 10 and 12, the clamp system 230 includes first flat head set screw 244 and a second flat head set screw 246. The first flat head set screw 244 is disposed in threaded engagement with the first wall 236. The second flat head set screw 246 is disposed in threaded engagement with the second wall 238. The first flat head set screw 244 and the second flat head set screw 246 are disposed opposite each other across the longitudinal axis 224 from each other. Additionally, the first flat head set screw 244 and the second flat head set screw 246 are axially aligned with each other along the longitudinal axis 224.

Referring to Figure 13, the first flat head set screw 244 and the second flat head set screw 246 each include a threaded shank portion 248 and a tapered head portion 250. The tapered head portion 250 includes a flat surface presenting a tool engagement recess, and a conical surface 252 that extends from the flat surface to the shank portion 248. The conical surface 252 is angled relative to a center axis of the shank portion 248, at an approximate angle of sixty degrees (60°). The angle of the conical surface 252 is an industry standard, and is typical of all flat head screws. The conical surfaces 252 of the head portions 250 of the first flat head set screw 244 and the second flat head set screw 246 define the pair of opposing clamp surfaces 254, 256, against which the picatinny or weaver style accessory rail 232 is clamped between. As such, the first flat head set screw 244 includes a first clamp surface 254, i.e., the conical surface 252 of the head portion 250 of the first flat head set screw 244, and the second flat head set screw 246 includes a second clamp surface 256, i.e., the conical surface 252 of the head portion 250 of the second flat head set screw 246. As such, the pair of opposing clamp surfaces 254, 256 includes the first clamp surface 254 and the second clamp surface 256.

Referring to Figures 10 and 12, the exemplary embodiment of the clamp system 230 for the spring compressor 220 further includes an optional third flat head set screw 258 and fourth flat head set screw 260. The third flat head set screw 258 and the fourth flat head set screw 260 have the same geometry described above for the first flat head set screw 244 and the second flat head set screw 246. The third flat head set screw 258 is disposed in threaded engagement with the first wall 236. The fourth flat head set screw 260 is disposed in threaded engagement with the second wall 238. The third flat head set screw 258 and the fourth flat head set screw 260 are disposed opposite each other across the longitudinal axis 224 from each other. Additionally, the third flat head set screw 258 and the fourth flat head set screw 260 are axially aligned with each other along the longitudinal axis 224, and are axially spaced from the first flat head set screw 244 and the second flat head set screw 246 along the longitudinal axis 224. The first flat head set screw 244 and the third flat head set screw 258 cooperate to define the first clamp surface 254, and the second flat head set screw 246 and the fourth flat head set screw 260 cooperate to define the second clamp surface 256. While the exemplary embodiment of the clamp system 230 is shown with the optional third flat head set screw 258 and the fourth flat head set screw 260, it should be appreciated that the third flat head set screw 258 and the fourth flat head set screw 260 need not be included in the clamp system 230.

While the exemplary embodiment of the spring compressor 220 is shown with the first flat head set screw 244 and the third flat head set screw 258 defining the first clamp surface 254 of the pair of opposing clamp surfaces 254, 256, and the second flat head set screw 246 and the fourth flat head set screw 260 defining the second clamp surface 256 of the pair of opposing clamp surfaces 254, 256, it should be appreciated that in other embodiments, such as shown in Figure 18, the first wall 236 may define a first slot 338 extending along the longitudinal axis 224, and the second wall 238 may define a second slot 340 extending along the longitudinal axis 224, with the first slot 338 and the second slot 340 disposed opposite each other across the longitudinal axis 224, and with the first slot 338 and the second slot 340 forming the pair of opposing clamp surfaces 254, 256. Such a configuration is also shown and described above with reference to the spring compressor 30, and shown in Figures 3-7.

Referring to Figures 12 and 13, the clamp system 230 includes a cross bore 262, which extends transverse to the longitudinal axis 224 of the beam 222, through the first wall 236 and the second wall 238. Specifically, the cross bore 262 includes a first section 264 extending through the first wall 236, and a second section 266 extending through the second wall 238. The second section 266 of the cross bore 262 includes a thread form having a major diameter 268 and a minor diameter 270. The first section 264 of the cross bore 262 includes a diameter 272 that is larger than the major diameter 268 of the thread form of the second section 266 of the cross bore 262. A clamp screw 274 extends through the first section 264 of the cross bore 262, and into threaded engagement with the second section 266 of the cross bore 262. The clamp screw 274 includes threads that are complimentary to the thread form of the second section 266 of the cross bore 262. The clamp screw 274 is operable to draw the first wall 236 and the second wall 238 towards each other to clamp the picatinny or weaver style accessory rail 232 between the pair of opposing clamp surfaces 254, 256.

The diameter 272 of the first section 264 of the cross bore 262 is larger than the major diameter 268 of the thread form in the second section 266 of the cross bore 262, to provide clearance between a major diameter 268 of threads on the clamp screw 274. As the first wall 236 and the second wall 238 are clamped together, the first wall 236 and the second wall 238 will bend relative to the longitudinal axis 224, thereby causing the first section 264 of the cross bore 262 to become misaligned with the second section 266 of the cross bore 262. By sizing the first section 264 of the cross bore 262 larger than the major diameter 268 of the threads on the clamp screw 274, the first section 264 of the cross bore 262 provides enough clearance for the clamp screw 274 to prevent the clamp screw 274 from binding as the first wall 236 and the second wall 238 are clamped together.

Referring to Figure 12, the clamp system 230 may further include a spreader screw 276. The spreader screw 276 is disposed in threaded engagement with the first wall 236. The spreader screw 276 extends through the first wall 236, and has a distal end 278 that is disposed in abutting engagement with the second wall 238. Movement of the spreader screw 276 toward the second wall 238 spreads the first wall 236 and the second wall 238 apart from each other, thereby enabling the picatinny or weaver style accessory rail 232 to slide between the first flat head set screw 244 and the second flat head set screw 246, in a direction transverse to the longitudinal axis 224. Once positioned between the first flat head set screw 244 and the second flat head set screw 246, the spreader screw 276 may be retracted, or moved away from the second wall 238, to allow the clamp screw 274 to be tightened and draw the first wall 236 and the second wall 238 together to clamp the pair of opposing clamp surfaces 254, 256 against the accessory rail 232.

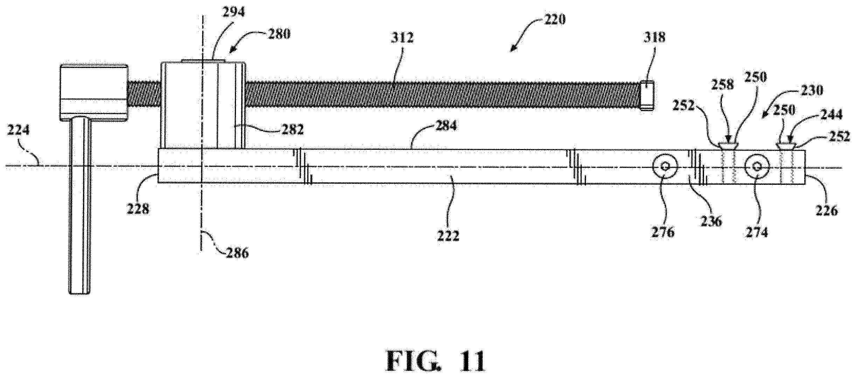

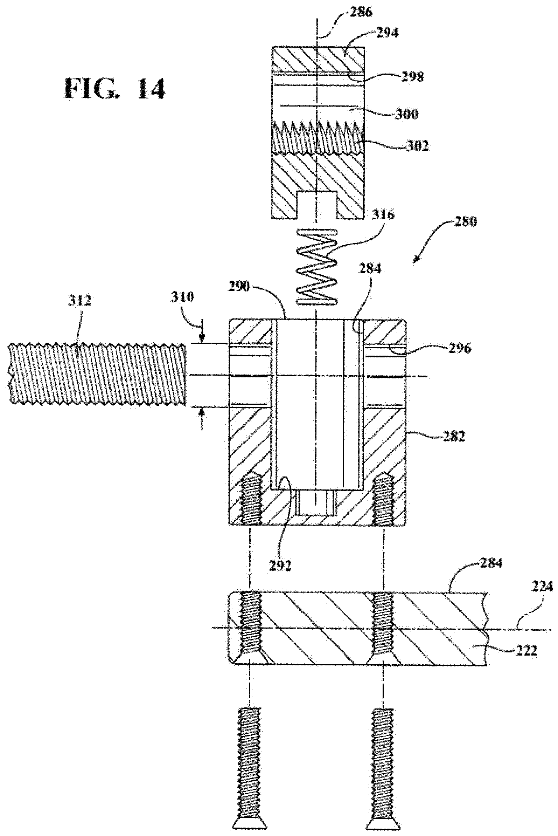

Referring to Figures 10 and 11, a compressor 280 is attached to the beam 222 adjacent the second end 228 of the beam 222. The compressor 280 includes a threaded rod 312 that is axially moveable along the longitudinal axis 224 relative to the beam 222 as described above. The compressor 280 may alternatively be referred to as a thread engagement device. Referring to Figures 14-16, the compressor 280 includes a post 282 extending from an upper longitudinal surface 284 of the beam 222. The post 282 may alternatively be referred to as a body of the compressor 280 or the thread engagement device. The post 282 extends along a central axis 286 in a direction substantially perpendicular to the longitudinal axis 224 of the beam 222. The post 282 defines a bore 288 that extends along the central axis 286 of the post 282. The bore may include a through bore 288. However, and as shown in the Figures, the bore 288 includes a blind bore. The bore is referred to hereinafter as the blind bore 288. The blind bore 288 has an open face 290 disposed at an upper surface of the post 282, and an interior end 292. The interior end 292 of the blind bore 288 is hereinafter referred to as the closed interior end 292. However, it should be appreciated that if the bore 288 is not a blind bore, such as shown in the Figures, then the bore 288 is not closed, and the interior end 292 may not include the closed interior end 292 shown in the Figures.

A button 294 is slideably disposed within the blind bore 288. The button 294 may alternatively be referred to as a piston of the compressor 280 or the thread engagement device. The button 294 is slideably moveable within the blind bore 288, relative to the post 282, along the central axis 286 of the post 282. The button 294 is slideably moveable between a raised position, and a depressed position, described in greater detail below.

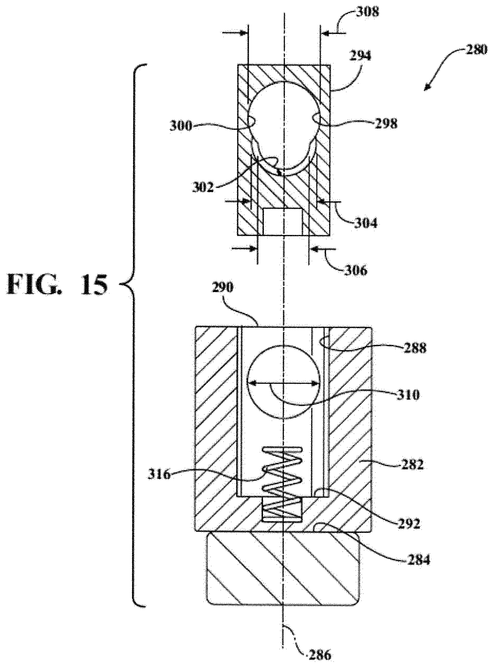

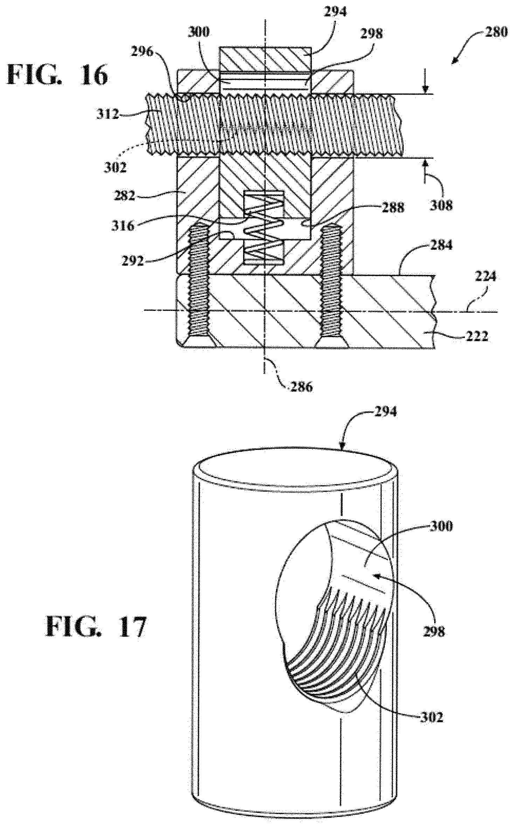

The post 282 includes a through bore 296, which extends generally parallel with the longitudinal axis 224 of the beam 222, and is generally perpendicular to the central axis 286 of the post 282. The button 294 includes a keyhole bore 298, which extends generally parallel with the longitudinal axis 224 of the beam 222, and is generally perpendicular to the central axis 286 of the post 282. As best shown in Figure 16, the through bore 296 of the post 282 is generally aligned with the keyhole bore 298 of the button 294. Referring also to Figure 17, the keyhole bore 298 includes a smooth bore portion 300, and a threaded portion 302. Referring to Figure 15, the threaded portion 302 of the keyhole bore 298 includes a thread form having a major diameter 304 and a minor diameter 306. The smooth bore portion 300 of the keyhole bore 298 includes a diameter 308 that is larger than the major diameter 304 of the threaded portion 302 of the keyhole bore 298. Furthermore, the diameter 308 of the smooth bore portion 300 of the keyhole bore 298 may be approximately equal to a diameter 310 of the through bore 296 of the post 282.

As best shown in Figure 15, the keyhole bore 298 may be formed in the button 294 by drilling a pair of offset bores through the button 294. A first bore forming the threaded portion 302 of the keyhole bore 298 is drilled first, and the first bore is tapped to form the threads in the threaded portion 302 of the keyhole bore 298. A second bore forming the smooth bore portion 300 of the keyhole bore 298 is drilled second. The second bore is offset from the first bore, yet overlaps with the first bore, such that a portion of the threaded bore is removed when the smooth bore portion 300 is drilled out. At least half, e.g., the upper half, of the threaded bore must be removed when forming the smooth bore portion 300 so that a threaded rod 312 may move vertically along the central axis 286 of the post 282 between the threaded portion 302 and the smooth bore portion 300 of the keyhole bore 298, as described below.

As noted above, the compressor 280 includes the threaded rod 312. The threaded rod 312 extends through the through bore 296 in the post 282 and the keyhole bore 298 in the button 294. The threaded rod 312 includes a thread form that is complimentary to the thread form in the threaded portion 302 of the keyhole bore 298. Additionally, the major diameter 304 of the thread form of the threaded rod 312 is approximately equal to, yet slightly larger than, the diameter 310 of the through bore 296 in the post 282, and the diameter 308 of the smooth bore portion 300 of the keyhole bore 298.

Referring to Figures 14-16, a biasing device 316 is disposed within the blind bore 288, between the button 294 and the closed interior end 292 of the post 282. The biasing device 316 biases the button 294 upward along the central axis 286 of the post 282. While the biasing device 316 is shown biasing between the button 294 and the closed interior end 292 of the blind bore 288, it should be appreciated that if the bore 288 is a through bore, then the biasing device 316 would bias against some other structure of the post 282 or the beam 222. With the threaded rod 312 extending through both the through bore 296 in the post 282 and the keyhole bore 298 in the button 294, the button 294 is secured within the blind bore 288 of the button 294. However, the shape of the keyhole bore 298 allows the button 294 to move vertically along the central axis 286 relative to the rod, between the raised position, and the depressed position. The biasing device 316 biases the button 294 upward, along the central axis 286, into the raised position. The biasing device 316 may include any device capable of biasing the button 294 into the raised position. For example, the biasing device 316 may include, but is not limited to, a spring, an electric motor, a piezoelectric actuator, an electronic actuator, a pneumatic actuator, a hydraulic actuator. In another embodiment, the biasing device 316 may include a sealed gas chamber that forms a pneumatic spring or actuator when the button 294 is moved into the depressed position by compressing a gas within the sealed gas chamber. In order to form the sealed gas chamber, the compressor may include a seal disposed between and in sealing engagement with the post 282 and the button 294.

As noted above, the button 294 is moveable, within the blind bore 288, between the depressed position and the raised position. When the button 294 is disposed in the depressed position, the button 294 is depressed downward along the central axis 286 of the post 282 so that the threaded rod 312 is disengaged from threaded engagement with the threaded portion 302 of the keyhole bore 298. With the threaded rod 312 and the threaded portion 302 of the keyhole bore 298 not disposed in threaded engagement, the threaded rod 312 is free to slide through the smooth bore portion 300 of the keyhole bore 298. When downward pressure to the button 294 is removed, the biasing device 316 biases the button 294 upward into the raised position, such that the threaded rod 312 engages the threaded portion 302 of the keyhole bore 298 in threaded engagement. As such, the biasing device 316 biases the threaded portion 302 of the keyhole bore 298 against the threaded rod 312, and further biases the threaded rod 312 against the through bore 296 in the post 282. With the threaded rod 312 disposed in threaded engagement with the threaded portion 302 of the keyhole bore 298, the threaded rod 312 must be rotated relative to the button 294 in order to move the threaded rod 312 along the longitudinal axis 224. Rotation of the threaded rod 312 in a first rotational direction advances a contact end 318 of the threaded rod 312 toward the first end 226 of the beam 222. The contact end 318 of the rod is disposed between the post 282 and the first end 226 of the beam 222. Rotation of the threaded rod 312 in a second rotational direction, opposite the first rotational direction, retracts the contact end 318 of the threaded rod 312 away from the first end 226 of the beam 222, axially along the longitudinal axis 224.

Referring to Figure 18, a fourth embodiment of the spring compressor is generally shown at 320. As described above, the beam 222 of the spring compressor 320 includes the connected first plate 330 and the second plate 332. The post 282 of the compressor 280 includes a center plate 334 disposed between the first plate 330 and the second plate 332. At least one fastener 336 passes through the first plate 330 and the center plate 334, and into threaded engagement with the second plate 332, to connect the first plate 330 and the second plate 332 together, and clamp the compressor 280 therebetween. The compressor 280 is otherwise configured as described above.

As noted above, the first wall 236 defines the first slot 338, and the second wall 238 may defines the second slot 340. The first slot 338 and the second slot 340 re disposed opposite each other across the longitudinal axis 224. The first slot 338 and the second slot 340 form the pair of opposing clamp surfaces 254, 256, against which the accessory rail 232 engages in interlocking engagement. The first slot 338 and the second slot 340 form a dovetail shaped mortise configuration, which is complimentary to a dovetailed shaped tenon configuration used by most common accessory rails 232.

## Claims

1. A spring compressor (30, 220) comprising:
a beam (32, 222) extending along a longitudinal axis (34, 224) between a first end (36, 226) and a second end (38, 228);
a clamp system (230) disposed adjacent the first end (36, 226) of the beam (32, 222), and operable to directly engage a picatinny style accessory rail (28, 232) in clamping engagement; and
a compressor (80, 280) attached to the beam (32, 222) adjacent the second end (38, 228) of the beam (32, 222) and axially moveable along the longitudinal axis (34, 224) relative to the beam (32, 222).

2. A spring compressor (30, 220) as claimed in claim 1, wherein the clamp system (230) comprises a pair of opposing clamp surfaces (254, 256) for engaging the accessory rail (28, 232) in interlocking engagement therebetween, wherein the interlocking engagement between the pair of opposing clamp surfaces (254, 256) and the accessory rail (28, 232) prevents lateral movement of the beam (32, 222) relative to the accessory rail (28, 232) in a direction transverse to the longitudinal axis (34, 224), and wherein the interlocking engagement between the pair of opposing clamp surfaces (254, 256) and the accessory rail (28, 232) allows longitudinal movement of the beam (32, 222) relative to the accessory rail (28, 232) along the longitudinal axis (34, 224).

3. A spring compressor (30, 220) as claimed in claim 2, wherein the clamp system (230) comprises a first wall (236) and a second wall (238), with the first wall (236) and the second wall (238) spaced apart from each other and extending along the longitudinal axis (34, 224).

4. A spring compressor (30, 220) as claimed in claim 3, wherein the clamp system (230) comprises a first flat head set screw (244) in threaded engagement with the first wall (236), and a second flat head set screw (246) in threaded engagement with the second wall (238), the first flat head set screw (244) and the second flat head set screw (246) being disposed opposite each other across the longitudinal axis (34, 224), the first flat head set screw (244) and the second flat head set screw (246) being axially aligned with each other along the longitudinal axis (34, 224);
the first flat head set screw (244) comprising a first clamp surface (254), and the second flat head set screw (246) comprising a second clamp surface (256), with the pair of opposing clamp surfaces (254, 256) comprising the first clamp surface (254) and the second clamp surface (256); and
each of the first flat head set screw (244) and the second flat head set screw (246) comprising a head portion (250) and a shank portion (248), with the head portion (250) of the first flat head set screw (244) defining the first clamp surface (254) and the head portion (250) of the second flat head set screw (246) defining the second clamp surface (256).

5. A spring compressor (30, 220) as claimed in claim 3, wherein the first wall (236) defines a first slot (338) extending along the longitudinal axis (34, 224), and the second wall (238) defines a second slot (340) extending along the longitudinal axis (34, 224), with the first slot (338) and the second slot (340) disposed opposite each other across the longitudinal axis (34, 224), and with the first slot (338) and the second slot (340) comprising the pair of opposing clamp surfaces (254, 256); and
the first slot (338) and the second slot (340) forming a dovetail mortise configuration for interlocking engagement with a dovetail shaped tenon.

6. A spring compressor (30, 220) as claimed in claim 3, wherein the clamp system (230) comprises a cross bore (70, 262) extending transverse to the longitudinal axis (34, 224), the cross bore (70, 262) comprising a first section (72, 264) extending through the first wall (236) and a second section (74, 266) extending through the second wall (238);
the second section (74, 266) of the cross bore (70, 262) comprising a thread form having a major diameter (268) and a minor diameter (270); and
the first section (72, 264) of the cross bore (70, 262) comprising a diameter that is larger than the major diameter (268) of the thread form of the second section (74, 266) of the cross bore (70, 262).

7. A spring compressor (30, 220) as claimed in claim 6, further comprising a clamp screw (78, 274) extending through the first section (72, 264) of the cross bore (70, 262) and into threaded engagement with the second section (74, 266) of the cross bore (70, 262), and operable to draw the first wall (236) and the second wall (238) towards each other to clamp the accessory rail (28, 232) between the pair of opposing clamp surfaces (254, 256).

8. A spring compressor (30, 220) as claimed in claim 3, wherein the clamp system (230) comprises a spreader screw (276) extending through the first wall (236) and in threaded engagement with the first wall (236), and having a distal end (278) in abutting engagement with the second wall (238), such that movement of the spreader screw (276) toward the second wall (238) spreads the first wall (236) and the second wall (238) apart from each other.

9. A spring compressor (30, 220) as claimed in claim 1, wherein the compressor (80, 280) comprises a post (82, 282) extending from the beam (32, 222) in a direction substantially perpendicular to the longitudinal axis (34, 224) of the beam (32, 222).

10. A spring compressor (30, 220) as claimed in claim 9, wherein the post (82, 282) defines a bore (288) extending along a central axis (286) of the post (82, 282), with the bore having an open face (290) and an end (292).

11. A spring compressor (30, 220) as claimed in claim 10, wherein the compressor (80, 280) comprises a button (294) slideably moveable within the bore (288) relative to the post (82, 282) along the central axis (286) of the post (82, 282) and a biasing device (316) biasing against the button (294).

12. A spring compressor (30, 220) as claimed in claim 11, wherein the post (82, 282) comprises a through bore (296) extending generally parallel with the longitudinal axis (34, 224) of the beam (32, 222) and generally perpendicular to the central axis (286) of the post (82, 282) and the button (294) comprises a keyhole bore (298) extending generally parallel with the longitudinal axis (34, 224) of the beam (32, 222) and generally perpendicular to the central axis (286) of the post (82, 282).

13. A spring compressor (30, 220) as claimed in claim 12, wherein the keyhole bore (298) comprises a smooth bore portion (300), and a threaded portion (302) defining a thread form having a major diameter (304) and a minor diameter (306);
the smooth bore portion (300) of the keyhole bore (298) comprising a diameter (308) that is larger than the major diameter (304) of the threaded portion (302) of the keyhole bore (298).

14. A spring compressor (30, 220) as claimed in claim 13, wherein the button (294) is moveable between a depressed position and a raised position, with the threaded rod (312) disengaged from threaded engagement with the threaded portion (302) of the keyhole bore (298) when the button (294) is disposed in the depressed position so that the threaded rod (312) is slideable through the smooth bore portion (300) of the keyhole bore (298), and with the threaded rod (312) engaged in threaded engagement with the threaded portion (302) of the keyhole bore (298) when the button (294) is disposed in the raised position, such that rotation of the threaded rod (312) in a first rotational direction advances the contact end of the threaded rod (312) toward the first end (36, 226) of the beam (32, 222), and rotation of the threaded rod (312) in a second rotational direction retracts the contact end of the threaded rod (312) away from the first end (26, 226) of the beam (32, 222) and wherein the biasing device (316) biases the button (294) into the raised position.

## Patentansprüche

1. Federspanner (30, 220) umfassend:
einen Träger (32, 222), der sich entlang einer Längsachse (34, 224) zwischen einem ersten Ende (36, 226) und einem zweiten Ende (38, 228) erstreckt;
ein Klemmsystem (230), das benachbart zu dem ersten Ende (36, 226) des Trägers (32,222) angeordnet ist, und betätigbar ist, um direkt mit einer Picatinny-artigen Zubehörschiene (28, 232) in Klemmeingriff zu gelangen; und
einen Spanner (80, 280), der angrenzend an das zweite Ende (38, 228) des Trägers (32, 222) an dem Träger (32, 222) angebracht ist und entlang der Längsachse (34, 224) relativ zu dem Träger (32, 222) axial bewegbar ist.

2. Federspanner (30, 220) nach Anspruch 1, wobei das Klemmsystem (230) ein Paar gegenüberliegende Klemmflächen (254, 256) aufweist, um die dazwischen liegende Zubehörschiene (28, 232) formschlüssig zu Ergreifen, wobei das formschlüssige Ergreifen zwischen dem Paar gegenüberliegender Klemmflächen (254, 256) und die Zubehörschiene (28, 232) eine seitliche Bewegung des Trägers (32, 222) relativ zur Zubehörschiene (28, 232) und in einer Richtung quer zur Längsachse (34, 224) verhindert, und wobei das formschlüssige Ergreifen zwischen dem Paar gegenüberliegender Klemmflächen (254, 256) und die Zubehörschiene (28, 232) eine Längsbewegung des Trägers (32, 222) relativ zur Zubehörschiene (28, 232) und entlang der Längsachse (34, 224) ermöglicht.

3. Federspanner (30, 220) nach Anspruch 2, wobei das Klemmsystem (230) eine erste Seitenwand (236) und eine zweite Seitenwand (238) umfasst, wobei die erste Seitenwand (236) und die zweite Seitenwand (238) voneinander beabstandet sind und sich entlang der Längsachse (34, 224) erstrecken.

4. Federspanner (30, 220) nach Anspruch 3, wobei das Klemmsystem (230) eine erste Flachkopf-Feststellschraube (244) in Gewindeeingriff mit der ersten Seitenwand (236) und eine zweite Flachkopf-Feststellschraube (246) in Gewindeeingriff mit der zweiten Seitenwand (238) umfasst, wobei die erste Flachkopf-Feststellschraube (244) und die zweite Flachkopf-Feststellschraube (246) über die Längsachse (34,224) einander gegenüberliegend angeordnet sind, wobei die erste Flachkopf-Feststellschraube (244) und die zweite Flachkopf-Feststellschraube (246) entlang der Längsachse (34, 224) zueinander axial ausgerichtet sind;
wobei die erste Flachkopf-Feststellschraube (244) eine erste Klemmfläche (254) umfasst, und die zweite Flachkopf-Feststellschraube (246) eine zweite Klemmfläche (256) umfasst, wobei das Paar gegenüberliegender Klemmflächen (254, 256) die erste Klemmfläche (254) und die zweite Klemmfläche (256) umfasst; und
wobei jede der ersten Flachkopf-Feststellschraube (244) und der zweiten Flachkopf-Feststellschraube (246) einen Kopfabschnitt (250) und einen Schaftabschnitt (248) aufweist, wobei der Kopfabschnitt (250) der ersten Flachkopf-Feststellschraube (244) die erste Klemmfläche (254) definiert und der Kopfabschnitt (250) der zweiten Flachkopf-Feststellschraube (246) die zweite Klemmfläche (256) definiert.

5. Federspanner (30, 220) nach Anspruch 3, wobei die erste Seitenwand (236) einen ersten Schlitz (338) definiert, der sich entlang der Längsachse (34, 224) erstreckt, und die zweite Seitenwand (238) einen zweiten Schlitz (340) definiert, der sich entlang der Längsachse (34, 224) erstreckt, wobei der erste Schlitz (338) und der zweite Schlitz (340) über die Längsachse (34, 224) einander gegenüberliegend angeordnet sind, und wobei der erste Schlitz (338) und der zweite Schlitz (340) das Paar einander gegenüberliegende Klemmflächen (254, 256) umfassen; und
wobei der erste Schlitz (338) und der zweite Schlitz (340) eine Schwalbenschwanz-Einsteck-Konfiguration für einen formschlüssigen Eingriff mit einem schwalbenschwanzförmigen Zapfen, bilden.

6. Federspanner (30, 220) nach Anspruch 3, wobei das Klemmsystem (230) eine Querbohrung (70, 262) umfasst, die sich quer zur Längsachse (34, 224) erstreckt, wobei die Querbohrung (70, 262) einen ersten Abschnitt (72, 264) umfasst, der sich durch die erste Seitenwand (236) erstreckt, und einen zweiten Abschnitt (74, 264), der sich durch die zweite Seitenwand (238) erstreckt;
wobei der zweite Abschnitt (74, 266) der Querbohrung (70, 262) eine Gewindeform mit einem Hauptdurchmesser (268) und einem kleineren Durchmesser (270) umfasst; und
wobei der erste Abschnitt (72, 264) der Querbohrung (70, 262) einen Durchmesser aufweist, der grösser ist als der Hauptdurchmesser (268) der Gewindeform des zweiten Abschnittes (74, 266) der Querbohrung (70, 262).

7. Federspanner (30, 220) nach Anspruch 6, weiter umfassend eine Klemmschraube (78, 274), die sich durch den ersten Abschnitt (72, 264) der Querbohrung (70, 262) und in einen Gewindeeingriff mit dem zweiten Abschnitt (74, 266) der Querbohrung (70, 262) erstreckt, und betätigbar ist, um die erste Seitenwand (236) und die zweite Seitenwand (238) zueinander zu ziehen um die Zubehörschiene (28, 232) zwischen dem Paar gegenüberliegender Klemmflächen (254, 256) einzuklemmen.

8. Federspanner (30, 220) nach Anspruch 3, wobei das Klemmsystem (230) eine Spreizschraube (276) umfasst, die sich durch die erste Seitenwand (236) und in Gewindeeingriff mit der ersten Seitenwand (236) erstreckt, und ein distales Ende (278) in anliegenden Eingriff mit der zweiten Seitenwand (238) aufweist, so dass eine Bewegung der Spreizschraube (276) in Richtung der zweiten Seitenwand (238) die erste Seitenwand (236) und die zweite Seitenwand (238) auseinanderspreizt.

9. Federspanner (30, 220) nach Anspruch 1, wobei der Spanner (80, 280) einen Ständer (82, 282) umfasst, der sich von dem Träger (32, 222) in einer im Wesentlichen senkrecht zu der Längsachse (34, 224) des Trägers (32, 222) stehenden Richtung erstreckt.

10. Federspanner (30, 220) nach Anspruch 9, wobei der Ständer eine Bohrung (288) definiert, die sich entlang einer Mittelachse (286) des Ständers (82, 282) erstreckt, wobei die Bohrung eine offene Fläche (290) und ein Ende (292) aufweist.

11. Federspanner (30, 220) nach Anspruch 10, wobei der Spanner (80, 280) einen Knopf (294) umfasst, der innerhalb der Bohrung (288) relativ zu dem Ständer (82, 282) entlang der Mittelachse (286) des Ständers (82, 282) gleitend bewegbar ist, und eine Vorspannvorrichtung (316), die gegen den Knopf (294) vorspannt.

12. Federspanner (30, 220) nach Anspruch 11, wobei der Ständer (82, 282) eine Durchgangsbohrung (296) umfasst, die sich im Wesentlichen parallel zur Längsachse (34, 224) des Trägers (32, 222) und im Wesentlichen senkrecht zur Mittelachse (286) des Ständers (82, 282) erstreckt, und wobei der Knopf (294) eine Schlüssellochbohrung (298) umfasst, die sich im Wesentlichen parallel zur Längsachse (34, 222) des Trägers (32, 222) und im Wesentlichen senkrecht zur Mittelachse (286) des Ständers (82, 282) erstreckt.

13. Federspanner (30, 220) nach Anspruch 12, wobei die Schlüssellochbohrung (298) einen glatten Bohrungsabschnitt (300) aufweist, und einen Gewindeabschnitt (302) aufweist, der eine Gewindeform mit einem Hauptdurchmesser (304) und einem Nebendurchmesser (306) definiert;
wobei der glatte Bohrungsabschnitt (300) der Schlüssellochbohrung (298) einen Durchmesser (308) aufweist, der grösser ist als der Hauptdurchmesser (304) des Gewindeabschnitts (302) der Schlüssellochbohrung (298).

14. Federspanner (30, 220) nach Anspruch 13, wobei der Knopf zwischen einer niedergedrückten Position und einer angehobenen Position bewegbar ist, wobei die Gewindestange (312) von dem Gewindeeingriff mit dem Gewindeabschnitt (302) der Schlüssellochbohrung (298) gelöst ist, wenn der Knopf (294) in der niedergedrückten Position angeordnet ist, so dass die Gewindestange (312) durch den glatten Bohrungsabschnitt (300) der Schlüssellochbohrung (298) verschiebbar ist, und wobei die Gewindestange (312) in Gewindeeingriff mit dem Gewindeabschnitt (302) der Schlüssellochbohrung (298) steht, wenn der Knopf (294) in der angehobenen Position angeordnet ist, so dass eine Drehung der Gewindestange (312) in eine erste Drehrichtung das Kontaktende der Gewindestange (312) in Richtung auf das erste Ende (36, 226) des Trägers (32, 222) vorschiebt, und wobei eine Drehung der Gewindestange (312) in eine zweite Drehrichtung das Kontaktende der Gewindestange (312) von dem ersten Ende (26, 226) des Trägers (32,222) wegzieht, und wobei die Vorspannvorrichtung (316) den Knopf (294) in die angehobene Position vorspannt.

## Revendications

1. Compresseur de ressort (30, 220) comprenant :
une tige (32, 222) s'étendant le long d'un axe longitudinal (34, 224) entre une première extrémité (36,226) et une deuxième extrémité (38, 228) ;
un système de pince (230) disposé de manière adjacente à la première extrémité (36, 226) de la tige (32, 222) et opérable pour s'engager directement avec un rail d'accessoire (28, 232) de type Picatinny par pincement ; et
un compresseur (30, 220) fixé à la tige (32, 222) de manière adjacente à la deuxième extrémité (38, 228) de la tige (32, 222) et pouvant être déplacé de manière axiale le long de l'axe longitudinal (34, 224) par rapport à la tige (32, 222).

2. Compresseur de ressort (30, 220) selon la revendication 1, selon lequel le système de pince (230) comprend une paire de surfaces de pince opposées (254, 256) pour s'engager avec le rail d'accessoire (28, 232) sous forme d'engagement intercalaire, selon lequel l'engagement intercalaire entre les deux surfaces opposées de pincement (254, 256) et le rail d'accessoire (28, 232) empêche le mouvement latéral de la tige (32,222) par rapport au rail d'accessoire (28, 232) selon une direction transversale par rapport à l'axe longitudinal (34,224), et selon lequel l'engagement intercalaire entre la paire de surfaces opposées de pincement (254, 256) et le rail d'accessoire (28, 232) permet un mouvement longitudinal de la tige (32, 222) par rapport au rail d'accessoire (28, 232) le long de l'axe longitudinal (34, 224).

3. Compresseur de ressort (30, 220) selon la revendication 2, selon lequel le système de pince (230) comprend une première paroi (236) et une deuxième paroi (238), la première paroi (236) et la deuxième paroi (238) étant espacées l'une de l'autre et s'étendant le longe de l'axe longitudinal (34, 224).

4. Compresseur de ressort (30, 220) selon la revendication 3, selon lequel le système de pince (230) comprend une première vis fixe à tête plate (244) engagée par vissage avec la première paroi (236), et une deuxième vis fixe à tête plate (246) engagée par vissage avec la deuxième paroi (238), la première vis fixe à tête plate (244) et la deuxième vis fixe à tête plate (246) étant disposées l'une à l'opposée de l'autre à travers l'axe longitudinal (34, 224), la première vis fixe à tête plate (244) et la deuxième vis fixe à tête plate (246) étant alignées axialement l'une avec l'autre le long de l'axe longitudinal (34, 224) ;
la première vis fixe à tête plate (244) comprenant une première surface de pincement (254), et la deuxième vis fixe à tête plate (246) comprenant une deuxième surface de pincement (256), la paire de surfaces opposées de pincement (254,256) comprenant la première surface de pincement (254) et la deuxième surface de pincement (256) ; et
chacune parmi la première vis fixe à tête plate (244) et la deuxième vis fixe à tête plate (246) comprenant une partie formant tête (250) et une partie formant tige (248), la partie formant tête (250) de la première vis fixe à tête plate (244) définissant la première surface de pincement (254) et la partie formant tête (250) de la deuxième vis fixe à tête plate (246) définissant la deuxième surface de pincement (256).

5. Compresseur de ressort (30, 220) selon la revendication 3, selon lequel la première paroi (236) définit une première fente (338) s'étendant le long de l'axe longitudinal (34, 224), et la deuxième paroi définit une deuxième fente (340) s'étendant le long de l'axe longitudinal (34, 224), la première fente (338) et la deuxième fente (340) étant disposées l'une à l'opposé de l'autre à travers l'axe longitudinal (34, 224), la première fente (338) et la deuxième fente (340) comprenant la paire de surfaces de pincement (254, 256) opposées ; et
la première fente (338) et la deuxième fente (340) formant une configuration mortaise en forme de queue d'aronde pour un engagement intercalaire avec un tenon en forme de queue d'aronde.

6. Compresseur de ressort (30, 220) selon la revendication 3, selon lequel le système à pince (230) comprend un alésage croisé (70, 262) s'étendant de manière transversale à l'axe longitudinal (34, 224), l'alésage croisé (70, 262) comprenant une première section (72, 264) s'étendant à travers la première paroi (236) et une deuxième section (74, 266) s'étendant à travers la deuxième paroi (238) ;
la deuxième section (74, 266) de l'alésage croisé (70, 262) comprenant un taraudage présentant un diamètre majeur (268) et un diamètre mineur (270) ; et
la première section (72, 264) de l'alésage croisé (70, 262) comprenant un diamètre qui est plus important que le diamètre majeur et (268) du taraudage de la deuxième section (74, 266) de l'alésage croisé (70, 262).

7. Compresseur de ressort (30, 220) selon la revendication 6, comprenant en outre une vis de pince (78, 274) s'étendant à travers la première section (72, 264) de l'alésage croisé (70, 262) vers un engagement de vissage avec la deuxième section (74, 266) de l'alésage croisé (70, 262), et opérable de manière à attirer la première paroi (236) et la deuxième paroi (238) l'une vers l'autre, afin de pincer le rail d'accessoire (28, 232) entre la paire de surfaces de pincement opposées (254, 256).

8. Compresseur de ressort (30, 220) selon la revendication 3, selon lequel le système de pince (230) comprend une vis d'écartement (276) s'étendant à travers la première paroi (236) et s'engagement par vissage avec la première paroi (236), et présentant une extrémité distale (278) s'engageant en butée avec la deuxième paroi (238), de telle sorte que le mouvement de la vis d'écartement (276) en direction de la deuxième paroi (238) écarte la première paroi (236) et la deuxième paroi (238) l'une de l'autre.

9. Compresseur de ressort (30, 220) selon la revendication 1, selon lequel le compresseur (80, 280) comprend un montant (82, 282) s'étendant depuis la tige (32, 222) dans une direction sensiblement perpendiculaire à l'axe longitudinal (34, 224) de la tige (32,222).

10. Compresseur de ressort (30, 220) selon la revendication 9, selon lequel le montant (82, 282) définit un alésage (288) s'étendant le long d'un axe central (286) du montant (82,282), l'alésage présentant une face ouverte (290) et une extrémité (292).

11. Compresseur de ressort (30, 220) selon la revendication 10, selon lequel le compresseur (80, 280) comprend un bouton (294) qui se déplace de manière coulissante à l'intérieur de l'alésage (288) par rapport au montant (82, 282) le long de l'axe central (286) du montant (82, 282) et un dispositif à biais (316) appliquant un biais contre le bouton (294).

12. Compresseur de ressort (30, 220) selon la revendication 11, selon lequel le montant (82, 282) comprend un alésage traversant (296) s'étendant sensiblement en parallèle à l'axe longitudinal (34, 224) de la tige (32, 222) et sensiblement perpendiculaire à l'axe central (286) du montant (82, 282), et le bouton (294) comprend un alésage à trou de serrure (298) s'étendant sensiblement en parallèle à l'axe longitudinal (34, 224) de la tige (32, 222) et sensiblement perpendiculaire à l'axe central (286) du montant (82, 282).

13. Compresseur de ressort (30, 220) selon la revendication 12, selon lequel l'alésage à trou de serrure (298) comprend une partie d'alésage lisse (300), et une partie d'alésage taraudée (302) définissant un taraudage présentant un diamètre majeur (304) et un diamètre mineur (306) ;
la partie d'alésage lisse (300) de l'alésage à trou de serrure (298) comprenant un diamètre (308) qui est plus important que le diamètre majeur (304) de la partie taraudée (302) de l'alésage à trou de serrure (298).

14. Compresseur de ressort (30, 220) selon la revendication 13, selon lequel le bouton (294) est déplaçable entre une position rabattue et une position en saillie, la tige filetée (312) étant désengagée de son engagement par vissage de la partie taraudée de l'alésage à trou de serrure (298) lorsque le bouton (294) est situé en position rabattue, de telle sorte que la tige filetée (312) peut coulisser à travers la partie lisse d'alésage (300) de l'alésage à trou de serrure (298), la tige filetée (312) étant engagée par vissage avec la partie taraudée (302) de l'alésage à trou de serrure (298) lorsque le bouton est situé dans la position en saillie, de telle sorte qu'une rotation de la tige filetée (312) selon une première direction en rotation fait avancer l'extrémité de contact de la tige filetée (312) vers la première extrémité (36, 226) de la tige (32, 222), et une rotation de la tige filetée (312) selon une deuxième direction de rotation fait reculer l'extrémité de contact de la tige filetée (312) dans une direction opposée à la première extrémité (26, 226) de la tige (32, 222), et selon lequel le dispositif à biais (316) applique un biais au bouton pour le mettre en position de saillie.
